# EUROPEAN PATENT APPLICATION

(11) **EP 1 669 562 A1**
(43) Date of publication of application: **14.06.2006**
(21) Application number: 04772218.6
(22) Date of filing: 26.08.2004
(51) Int. Cl.: F01N 3/02

(54) **EXHAUST GAS PROCESSING METHOD AND EXHAUST GAS PROCESSING SYSTEM**

(30) Priority: 29.08.2003 JP 2003306307
(71) Applicant: Nissin Electric Co., Ltd., Kyoto-shi, Kyoto 615-8686 (JP); Isuzu Motors Limited, Tokyo 140-8722 (JP); Mizuno, Akira, Nagoya-shi, Aichi 4600022 (JP)
(72) Inventor: NAITO, Kenta, c/o Nissin Electric Co., Ltd., Kyoto 6158686 (JP); SENBAYASHI, Satouru, c/o Nissin Electric Co., Ltd., Kyoto 6158686 (JP); KASAI, Junichi, c/o Isuzu Motors Limited, Fujisawa-shi, Kanagawa 2528501 (JP); MIZUNO, Akira,Urbanrafre Kanayama 1202, Aichi 4600022 (JP)
(74) Representative: Weber, Dieter
(86) International application number: PCT/JP2004/012262
(87) International publication number: WO 2005/021940

(57) **Abstract**

An exhaust gas processing method and an exhaust gas processing system for controlling the spatial density distribution of particulate matter in exhaust gas by utilizing corona discharge in exhaust gas containing floating particulate matter such as diesel engine exhaust gas to form a relatively particulate matter-rich area and a relatively particulate matter-lean area, and diving exhaust gas particulates to the former and the latter. An exhaust gas processing system (10) provided with a high-voltage electrode (12) and a low-voltage electrode (11), wherein exhaust gas G is allowed to flow between the facing high-voltage electrode (12) and low-voltage electrode (11), and a high voltage is applied to between the counter electrodes to generate corona discharge in the exhaust gas G, whereby floating particulate matter (20) in the exhaust gas G is charged, the spatial density distribution of the floating particulate matter in the exhaust gas is controlled by an electrostatic force between the counter electrodes, and the exhaust gas G is divided into a high-concentration exhaust gas Gb in the vicinity of the low-voltage electrode where a particulate matter concentration is relatively high and a low-concentration exhaust gas Ga in the vicinity of the high-voltage electrode where a particulate matter concentration is relatively low.

## Description

### FIELD OF THE INVENTION

The present invention relates to an exhaust gas processing method and system for collecting floating particulate matter in exhaust gas using corona discharge.

### DESCRIPTION OF RELATED ART

To remove floating particulate matter (particulate matter: hereafter referred to as PM) included in the exhaust gas emitted by diesel engines, a technique that collects the particulate matter with a filter, referred to as a diesel particulate filter (hereafter referred to as DPF), so as to decrease the quantity of PM to be externally discharged is being developed.

On the other hand, in the case of the PM which causes air contamination, ultra-fine particles with diameters of 2.5 µm or smaller (particularly, with diameters of tens of nanometers) referred to as PM2.5 have recently become a problem on antipollution measures. It is considered that ultra-fine particles are also discharged from the direct-injection gasoline engine that is frequently used as an automobile engine at present. Therefore, establishment of a technique for removing the ultra-fine particles is very necessary.

However, when collecting the ultra-fine particles using only a DPF method, a filter with extremely fine meshes is necessary. Therefore, it is very difficult to collect the ultra-fine particles without a large pressure loss.

Therefore, as a method for collecting the ultra-fine particles with a diameter of tens of nanometers without a large pressure loss, a technique using an electric dust collection is being considered. To use the electric dust collection technique, a method and an apparatus for applying a high voltage to a high-voltage discharge wire for a dust-collecting electrode formed of a metal thin wire strained in a metal cylinder pipe and removing floating particulate matter such as white smoke and mist-like substance in like plant exhaust gas by electrostatically absorbing them, are proposed, as shown for example in registered utility model No. 3019526 and Japanese patent application *Kokai* publication No. 1994-142551.

In the case of the electric dust collection method and electric dust collector, floating particulate matter is electrified by generating corona discharge in exhaust gas at a charged area. Moreover, the particulate matter electrified at a dust-collecting area is removed from the gas by using electrostatic force (Coulomb force) and capturing the particulate matter in a dust-collecting electrode that is a sheet electrode with a low voltage (generally, ground potential).

Moreover, an apparatus for collecting the PM of an internal combustion engine, disclosed in Japanese patent application *Kokai* publication No.1984-85415, is proposed. In the case of this apparatus, an electric dust collector is provided in an exhaust gas passage and an electric heater is provided to a dust-collecting electrode. Furthermore, a collected amount of the PM attached to the surface of the electric heater is detected in accordance with the occurrence frequency of combustion discharge, and the electric heater is operated for a predetermined period of time based on this occurrence frequency to burn and remove the collected PM.

However, though the electric dust collector captures electrified particulate matter by using electrostatic force and using a vessel wall surface with a low voltage potential (generally, ground potential) as a dust-collecting electrode, there is a problem that a purifying performance is deteriorated in a comparatively short time (for example, in several minutes). That is, in the case of a configuration for collecting electrified particles by simply using the vessel wall surface as a dust-collecting electrode, the dust-collection area for the quantity of gas (exhaust gas) becomes comparatively small. Therefore, the quantity of particulate matter that can be collected becomes small, and the purifying performance is deteriorated in a comparatively short time due to deposition of particulate matter on the dust-collecting electrode.

Moreover, in the case of collecting the PM in the exhaust gas emitted by an internal combustion engine such as a diesel engine, there is a problem that a re-entrainment easily occurs because the PM has a comparatively low resistivity. To capture the re-entrained PM, it is considered to increase the dust-collection area and capture the re-entrained particles by providing a filter in the downstream side of an electrifying area. However, to keep the collection performance of the filter and prevent the pressure loss from increasing, it is necessary to decrease the flow rate of exhaust gas flowing into the filter to a certain extent (for example, 3 m/s or less), and the opening area of the filter is inevitably increased. Therefore, a problem occurs that the dust collector cannot be downsized.

### SUMMARY OF THE INVENTION

It is an object of the present invention to provide an exhaust gas processing method and an exhaust gas processing system for controlling the spatial density distribution of floating particulate matter in exhaust gas by utilizing corona discharge in exhaust gas containing floating particulate matter such as diesel engine exhaust gas to form a relatively particulate matter-rich area and a relatively particulate matter-lean area, and dividing exhaust gas particulate matter to the former and the latter.

An exhaust gas processing method of the present invention for achieving the above object comprises a high-voltage electrode and a low-voltage electrode facing said high-voltage electrode, wherein exhaust gas flows through between the counter electrodes, a high voltage is applied between the counter electrodes to generate corona discharge in the exhaust gas, floating particulate matter in the exhaust gas non-uniformly distributes near the low-voltage electrode by electrification and coheres through the corona discharge, and the exhaust gas near the low-voltage electrode is divided into high-concentration exhaust gas in which the concentration of the floating particulate matter is relatively high and low-concentration exhaust gas in which the concentration of the floating particulate matter is relatively low.

The relation between high voltage and low voltage in this case is that a voltage with a larger absolute value of positive and negative voltages is assumed as a high voltage and a voltage with a smaller absolute value of the voltages is assumed as a low voltage. Moreover, when one voltage is positive and the other is negative, the high and low of voltages are determined in accordance with magnitudes of the absolute values.

That is, in the case of an exhaust gas processing system having a high-voltage electrode and a low-voltage electrode, corona discharge is generated in exhaust gas by flowing exhaust gas G between the facing high-voltage electrode and low-voltage electrode and applying a high voltage between the counter electrodes. Thereby, the floating particulate matter in the exhaust gas G is electrified and the spatial density distribution of the floating particulate matter in the exhaust gas is controlled with the electrostatic force between the counter electrodes. Moreover, the exhaust gas is divided into a high-concentration exhaust gas near the low-voltage electrode in which the particulate matter concentration is relatively high and a low-concentration exhaust gas near the high-voltage electrode in which the particulate matter concentration is relatively low.

Furthermore, the flow of the exhaust gas undergoing the corona discharge treatment in a corona discharge area is divided by a double-pipe structure or the like. When dividing the flow, the particulate matter is non-uniformly distributed to one flow of the exhaust gas to separate and condense them by attracting the particulate matter electrified through the corona discharge treatment to a dust-collecting electrode by an electrostatic force.

According to this exhaust gas processing method, even a particulate matter with comparatively small electric resistance that abnormal re-entrainment in the case of electric dust collection, like the PM in the exhaust gas emitted by diesel engines, can be easily condensed.

Moreover, in the case of the exhaust gas processing method, when purifying the high-concentration exhaust gas with a filter, floating particulate matter can be easily collected even with a wide-mesh filter because the cohesion and corpulence of the floating particulate matter occurs, and only a small pressure loss occurs. Furthermore, because the quantity of the high-concentration exhaust gas is smaller than the quantity of the original exhaust gas, it is possible to decrease the capacity of the filter. Therefore, it is possible to downsize an exhaust gas processing system.

An exhaust gas processing system of the present invention for achieving the above object having a high-voltage electrode and a low-voltage electrode facing said high-voltage electrode, comprises an electrifying area in which exhaust gas flows through between the counter electrodes, a high voltage is applied between the counter electrodes to generate corona discharge in the exhaust gas, and the floating particulate matter is electrified, a condensing area for non-uniformly distributing the floating particulate matter electrified by the electrifying area near the low-voltage electrode, and a divide-flow area for dividing the exhaust gas near the low-voltage electrode in which the concentration of the floating particulate matter is relatively high, into high-concentration exhaust gas in which the concentration of the floating particulate matter is relatively high and low-concentration exhaust gas in which the concentration of the floating particulate matter is relatively low.

The boundary between the downstream side of the electrifying area and the upstream side of the condensing area and the boundary between the downstream side of the condensing area and the upstream side of the divide-flow area are not always clear, and they are frequently overlapped each other. However, the electrifying area, the condensing area, and the divide-flow area are constituted from the upstream side.

In the case of the exhaust gas processing system described above, the low-voltage electrode is formed into a cylindrical body, the high-voltage electrode is provided in the longitudinal direction along near the center of the low-voltage electrode of the cylindrical body in the electrifying area in at least the upstream side of the low-voltage electrode, and an inner cylinder for dividing exhaust gas is provided inside the low-voltage electrode in the divide-flow area in at least the downstream side of the low-voltage electrode, so that the low-concentration exhaust gas flows through the inside of the inner cylinder and the high-concentration exhaust gas flows through the outside of the inner cylinder. Thereby, the diameter of an exhaust gas purifying apparatus is decreased and the configuration of the apparatus is simplified.

In the case of the exhaust gas processing system described above, the low-voltage electrode is formed into a cylindrical body, the high-voltage electrode is provided in the longitudinal direction along near the center of the low-voltage electrode of the cylindrical body in the electrifying area in at least the upstream side of the low-voltage electrode, the low-voltage electrode is formed to be gas-permeable in the condensing area in the downstream side of the electrifying area, and an outer cylinder is provided outside the low-voltage electrode in the condensing area and the divide-flow area so that the exhaust gas flowing in from the upstream side of the low-voltage electrode is divided into the low-concentration exhaust gas flowing through the inside of the low-voltage electrode and the high-concentration exhaust gas flowing through the outside of the low-voltage electrode. This configuration enables to easily secure a space in which a gas treatment member such as a filter can be provided between the dust-collecting electrode and the outer cylinder.

Moreover, in the case of the exhaust gas processing system described above, it is possible to easily purify the floating particulate matter in the exhaust gas by using a filter for purifying floating particulate matter included in the high-concentration exhaust gas. When providing this filter to the condensing area and the divide-flow area, it is possible to downsize the whole exhaust gas processing system. Moreover, it is possible to provide a well-known DPF, separately from the low-voltage electrode of the exhaust gas processing apparatus. In this case, it is possible to use an existing DPF.

When purifying high-concentration exhaust gas with a filter, it is possible to easily collect the floating particulate matter by a wide-mesh filter because the cohesion and corpulence of the floating particulate matter occurs, and only a small pressure loss occurs. Moreover, because the quantity of the high-concentration exhaust gas is smaller than the quantity of the original exhaust gas, it is possible to decrease the capacity of the filter. Therefore, it is possible to downsize the exhaust gas processing system.

Moreover, if the low-concentration exhaust gas is purified up to a degree at which the exhaust gas does not require further processing, it is possible to configure the system so that the low-concentration exhaust gas is directly discharged. Furthermore, when the exhaust gas requires slight purification, it is possible to eliminate the necessity of further exhaust gas processing of the low-concentration exhaust gas by re-circulating the gas into cylinders as EGR gas.

Furthermore, when the low-concentration exhaust gas requires further exhaust gas processing and is purified with a filter, large floating particulate matter is removed and moreover, the PM quantity is extremely decreased. Therefore, it is possible to collect the remaining ultra-fine particles with tens of nm sizes by using a fine-mesh filter. Moreover, even if using a fine-mesh filter, clogging hardly occurs. Therefore, it is possible to remove the PM at a low pressure-loss for a long period of time. Moreover, it is possible to decrease the capacity of a filter because the quantity of low-concentration exhaust gas is smaller than the quantity of the original exhaust gas.

That is, it is possible to efficiently purify the high-concentration exhaust gas that includes the corpulence PM and the low-concentration exhaust gas that does not include the corpulence PM by a dust arrester or dust collector suitable for each, such as a filter.

Then, an exhaust gas processing method and an exhaust gas processing system of the present invention is particularly effective when exhaust gas is the exhaust gas of an internal combustion engine, particularly the exhaust gas emitted by diesel engines because the PM included in this exhaust gas has a comparatively low electric resistance and the PM collected by electric dust collector easily re-entrains.

Moreover, the exhaust gas processing system can be used independently or by combining a plurality of the systems in accordance with the relation between the quantity of the exhaust gas to be processed and the capacity of an exhaust gas processing system. Furthermore, by combining the exhaust gas processing systems at multistage, it is possible to further improve the degree of dilution or condensation and PM purifying performance.

The target gas of an exhaust gas processing method and an exhaust gas processing system of the present invention is not limited to the exhaust gas emitted by diesel engines, and it includes not only exhaust gas of an internal combustion engine for other vehicle or fixed-type internal combustion engine but also exhaust gas of a boiler, power generator, or combustion system such as a co-generator. Moreover, the dust includes not only the dust caused by combustion but also the dust caused by machining.

An exhaust gas processing method and an exhaust gas processing system of the present invention have the following advantages.

By applying a high voltage to a high-voltage electrode and generating corona discharge in exhaust gas, it is possible to electrify the floating particulate matter in the exhaust gas and result in the cohesion and non-uniform distribution of the matter on a low-voltage electrode or near the electrode. Moreover, the exhaust gas is divided into high-concentration exhaust gas in which the concentration of the floating particulate matter is high and low-concentration exhaust gas in which the concentration of the matter is low. Therefore, it is possible to easily condense even a particulate matter with a comparatively low electric resistance that re-entrains in the case of electric dust collection, like the PM in the exhaust gas emitted by diesel engines.

Moreover, in the case of high-concentration exhaust gas, it is possible to easily and efficiently collect the floating particulate matter even by a wide-mesh filter, and only a small pressure-loss occurs, because the cohesion and corpulence of the matter occurs and condensed. Furthermore, it is possible to decrease the capacity of a filter because the quantity of the high-concentration exhaust gas is smaller than the quantity of the original exhaust gas. Therefore, it is possible to downsize an exhaust gas processing apparatus and exhaust gas processing system.

Furthermore, large floating particulate matter is removed from low-concentration exhaust gas, and the PM quantity is extremely decreased. Therefore, it is possible to collect ultra-fine particles by using a fine-mesh filter when purifying the exhaust gas by the filter in order to raise the degree of purification. Furthermore, it is possible to remove the PM at a low pressure-loss for a long period of time because clogging hardly occurs even when using a fine-mesh filter. Furthermore, it is possible to decrease the capacity of the filter because the quantity of the low-concentration exhaust gas is smaller than the quantity of the original exhaust gas.

### BRIEF DESCRIPTION OF THE DRAWINGS

Fig. 1 is a block diagram of an exhaust gas processing system of first embodiment of the present invention.
Fig. 2 (a) is a sectional view of the exhaust gas processing system in Fig. 1, which is an illustration showing a cylindrical low-voltage electrode and a single high-voltage electrode.
Fig. 2 (b) is a sectional view of the exhaust gas processing system in Fig, 1, which is an illustration showing a rectangular low-voltage electrode and a plurality of high-voltage electrodes.
Fig. 3 is a block diagram of a separator of second embodiment of the present invention.
Fig. 4 (a) is a sectional view of the exhaust gas processing system in Fig. 3, which is an illustration showing a cylindrical low-voltage electrode and a single high-voltage electrode.
Fig. 4 (b) is a sectional view of the exhaust gas processing system in Fig. 3, which is an illustration showing a low-voltage electrode having a slender sectional-form and a plurality of high-voltage electrodes.
Fig. 5 is a block diagram of a separator of third embodiment of the present invention.
Fig. 6 is a block diagram of a separator of fourth embodiment of the present invention.
Fig. 7 (a) is a sectional view of the exhaust gas processing system in Fig. 6, which is an illustration showing a cylindrical low-voltage electrode and a single high-voltage electrode.
Fig.7 (b) is a sectional view of the exhaust gas processing system in Fig. 6, which is an illustration showing a low-voltage electrode having a slender sectional-form and a plurality of high-voltage electrodes.
Fig. 8 is a block diagram of a separator of fifth embodiment of the present invention.
Fig. 9 is an illustration showing a cylindrical low-voltage electrode and a plurality of high-voltage electrodes.

### DETAILED DESCRIPTION OF THE INVENTION

An embodiment of the present invention is described below by using an exhaust gas processing system for separating and condensing the PM included in the exhaust gas emitted by diesel engines as an example and referring to the accompanying drawings. The target gas of the present invention is not limited to the exhaust gas emitted by diesel engines, and it includes not only the exhaust gas of an internal combustion engine for other vehicle or fixed-type internal combustion engine but also the exhaust gas of a boiler, power generator, or combustion system such as a co-generator and the exhaust gas including dust caused by machining.

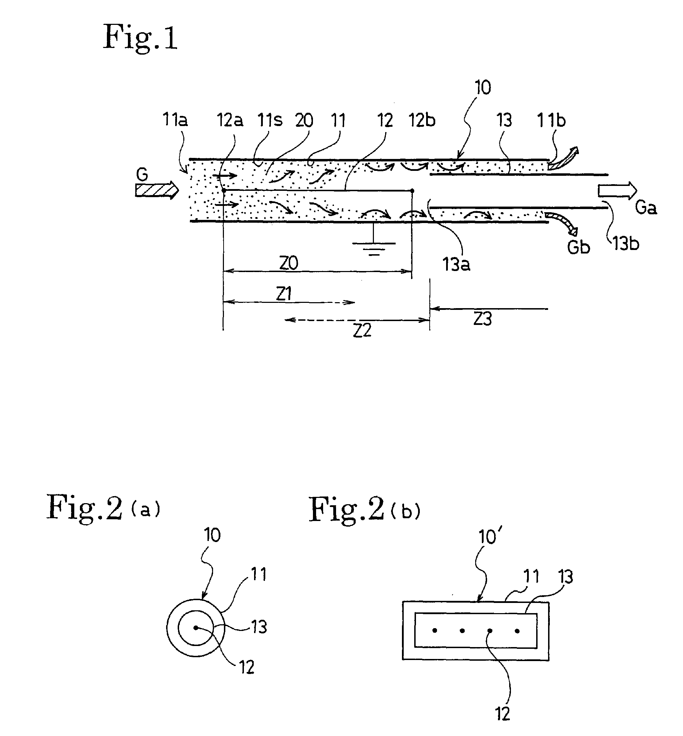

Figs. 1 and 2 show a configuration of an exhaust gas processing system 10 of first embodiment of the present invention. The exhaust gas processing system 10 is constituted including a cylindrical low-voltage electrode 11, high-voltage electrode 12, and inner cylinder 13.

The low-voltage electrode 11 is provided with facing the high-voltage electrode 12 and has a dust-collection function for collecting a floating particulate matter 20 electrified through corona discharge generated by a high voltage applied between the high-voltage electrode and the low-voltage electrode. Moreover, the low-voltage electrode 11 forms the outer wall of the flow path of exhaust gases G and Gb, which is formed of an electrical conductor of a metal such as stainless steel. One end of the low-voltage electrode 11 serves as an entrance 11a of the exhaust gas G and the other end of it serves as an exit 11b of the high-concentration exhaust gas Gb in which the floating particulate matter 20 is condensed. Moreover, the low-voltage electrode 11 is electrically grounded (earthed).

Furthermore, the high-voltage electrode 12 serves as a discharge electrode (corona discharge electrode) for generating corona discharge, which is provided in the longitudinal direction on almost the center line of the low-voltage electrode 11, that is, along an area near the center of the low-voltage electrode 11, at a corona discharge area Z0 including at least an electrifying area Z1 in the upstream side of the entrance 11a of the low-voltage electrode 11. To improve occurrence of discharge and effect of electric force, and in consideration of mechanical strength and the like, the high-voltage electrode 12 is constituted of a thin wire, rod, or stranded wire having a circular, angular, or angular twist cross section, or thin wire, rod, or stranded wire having an edge structure like barbed wire or twist brush. For example, it is also allowed to use a stainless wire, piano wire, or non-rust steel wire, having a diameter of 0.2 to 2 mm. Moreover, as a material, it is allowed to use a metal wire that is superior in corrosion resistance such as tungsten, nickel, titanium, inconel or the like, or a metal wire whose outer surface is coated with resin, glass, ceramic or the like, depending on the application.

Moreover, the inner cylinder 13 is a cylindrical exhaust-gas-dividing pipe, which is provided concentrically with the inside of the low-voltage electrode 11, and is provided at a divide-flow area Z3 in the downstream side of the low-voltage electrode 11. The exhaust gas G is divided with the inner cylinder 13. The low-concentration exhaust gas Ga in which the floating particulate matter 20 is diluted is flowed through the inside of the inner cylinder 13 and the high-concentration exhaust gas Gb in which the floating particulate matter 20 is condensed is flowed through the outside of the inner cylinder 13. It is allowed that the inner cylinder 13 is an electrical conductor or is not an electrical conductor. Therefore, the inner cylinder 13 is formed of a metal or other material in accordance with the type of the exhaust gas G. In this case, the inner cylinder 13 is made of stainless steel in response to the exhaust gas G emitted by diesel engines.

The low-voltage electrode 11 and the inner cylinder 13 are formed like a cylinder having a circular cross section as shown in Fig. 2 (a) when the quantity of exhaust gas to be processed is small and one high-voltage electrode 12 is provided in the center of it. However, the low-voltage electrode 11 and the inner cylinder 13 are respectively formed like a cylinder having a rectangular cross section and a plurality of high-voltage electrodes 12 are also provided in parallel in the center of it, as shown in Fig. 2 (b) when the quantity of exhaust gas to be processed is large.

In the case of the exhaust gas processing system 10 having the above structure, the exhaust gas G emitted by diesel engines is supplied from the entrance 11a. Moreover, a negative high voltage (e.g. -10 kV) is applied to the high-voltage electrode 12. By applying the high voltage, corona discharge occurs around the high-voltage electrode 12 and the circumferential area is filled with ions. Therefore, the PM (floating particulate matter) 20 in the exhaust gas G is electrified by adsorbing the ions.

The PM 20 electrified at the electrifying area Z1 in the upstream side of the discharging area Z0 is collected by the electrode surface 11s of the low-voltage electrode 11 (ground potential in the case of this example) by an electrostatic force (Coulomb force) at the condensing area Z2 in the downstream side of the discharging area Z0. The PM 20 that includes ultra-fine particles of tens-of-nm size is collected on the low-voltage electrode surface 11s and the cohesion occurs to form the PM 20 with a larger size. Thereby, the corpulence of PM 20 occurs.

The PM 20 included in the exhaust gas G emitted by diesel engines easily loses electric charges because it has a comparatively low electric resistance. Therefore, the corpulence PM 20 loses electric charges and electrostatic force, removing from the low-voltage electrode surface 11s due to the flow of the exhaust gas G and re-entrains. This re-entrained PM 20 is discharged from the exit 11b together with the exhaust gas Gb by passing through the passage between the inner cylinder 13 and the low-voltage electrode 11 because it moves to the downstream side along the low-voltage electrode surface 11s.

Then, most PM 20 in the exhaust gas G is attracted to the low-voltage electrode 11 by an electrostatic force, the concentration of the PM 20 relatively rises (compared to the exhaust gas at the entrance) around the high-voltage electrode 12, and the PM 20 is condensed near the low-voltage electrode 11. Therefore, the exhaust gas Gb discharged from the exit 11b becomes high-concentration exhaust gas in which the concentration of the PM 20 relatively rises.

The exhaust gas Ga flowing through the central area of the low-voltage electrode 11, that is, the circumferential area of the high-voltage electrode 12, enters the inner cylinder 13 from the entrance 13a, and is discharged from the exit 13b, passing through the passage inside. The exhaust gas Ga becomes low-concentration exhaust gas because most PM 20 in the exhaust gas G is attracted to the low-voltage electrode 11 by an electrostatic force and the concentration of PM 20 is diluted.

Therefore, according to the exhaust gas processing system 10, by providing a condensing area Z2 in the downstream side of the electrifying area Z1 through corona discharge, the PM 20 electrified through the corona discharge is collected on the low-voltage electrode surface 11s. It is possible to condense the PM 20 near the low-voltage electrode 11 by using a phenomenon that the collected, cohered, and enlarged PM 20 re-entrains from the low-voltage electrode surface 11s. Moreover, by providing the divide-flow area Z3 using the inner cylinder 13, it is possible to separate the exhaust gas into the low-concentration exhaust gas Ga in which the PM near the high-voltage electrode 12 is diluted and the high-concentration exhaust gas Gb in which the PM 20 near the low-voltage electrode 11 is condensed.

When forming the inner cylinder 13 by an electrical conductor and equalizing its potential with that of the low-voltage electrode 11, it is possible to obtain the enlarging effect of the PM due to cohesion and re-entrainment of the PM 20 on the inner surface and outer surface of the inner cylinder 13. Moreover, though the high-voltage electrode 12 is provided in the upstream side of the inner cylinder 13 in Fig. 1, it is also allowed to use a configuration of extending the high-voltage electrode 12 up to the inside of the inner cylinder 13 so as to obtain the enlarging effect of the PM inside the inner cylinder 13 to the separated low-concentration exhaust gas Ga. In fact, however, in the downstream end 12b of the high-voltage electrode 12 and the front end of the inner cylinder 13, it is necessary to relax an electric field of the terminal area of the high-voltage electrode 12 to stabilize the discharge, in consideration of dielectric breakdown, by bringing an electrostatic field (electric flux) into a preferable state.

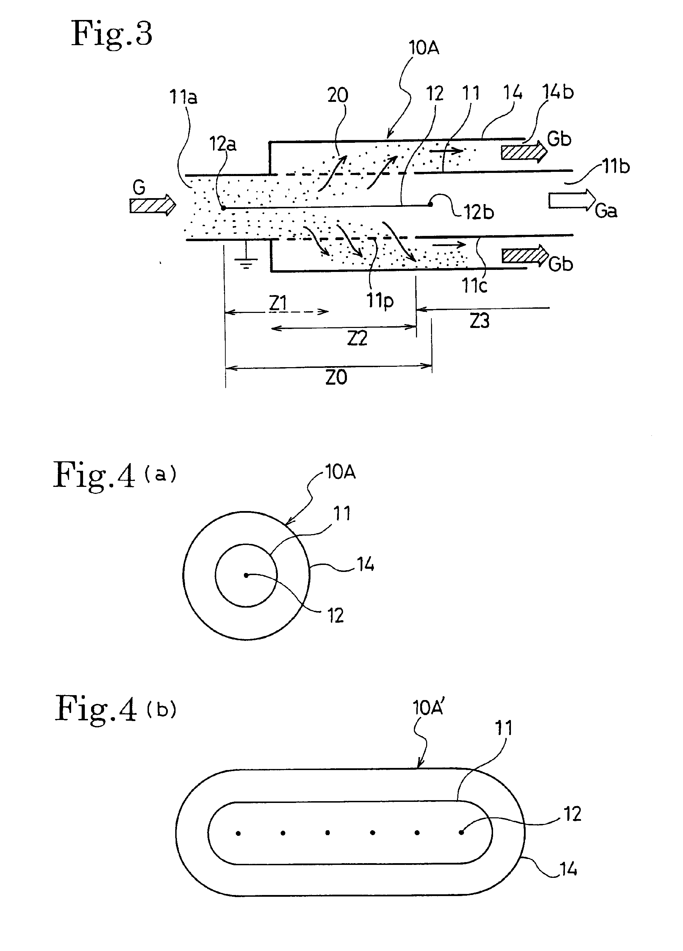

Figs. 3 and 4 show a configuration of an exhaust gas processing system 10A of second embodiment of the present invention. The exhaust gas processing system 10A is constituted including cylindrical low-voltage electrode 11, high-voltage electrode 12, and an outer cylinder 14.

The cylindrical low-voltage electrode 11 at condensing area Z2 has a dust-collecting function for attracting the floating particulate matter 20 electrified through the corona discharge generated when applying a high voltage to the high-voltage electrode 12 and a function serving as a boundary for separating some Gb of the exhaust gas G. Moreover, the electrode 11 functions as a material for forming flow path walls of exhaust gases G, Ga, and Gb at the divide-flow area Z3.

The low-voltage electrode 11 is formed of an electrical conductor such as a metal, similarly to the case of the exhaust gas processing system 10 of the first embodiment and electrically grounded (earthed). However, the low-voltage electrode 11 is constituted by forming a gas-permeable area 11p through which exhaust gas Gb can pass at the condensing area Z2 slightly in the downstream side of the upstream end 12a of the high-voltage electrode 12. The gas-permeable area 11p is formed into a meshed state or porous state by using a wire sheet, punching metal, foam metal, and the like and has a dust collecting function and a function for passing the exhaust gas Gb and the PM 20. Moreover, the low-voltage electrode 11 is formed of a wall surface 11c, which is not gas-permeable, at divide-flow area Z3 in the downstream side of the gas-permeable area 11p.

Moreover, the high-voltage electrode 12 is formed of an electrical conductor such as a metal similarly to the case of the exhaust gas processing system 10 of the first embodiment. Furthermore, the outer cylinder 14 serves as a cylindrical outer wall provided to the outside of the low-voltage electrode 11 at condensing area Z2 and divide-flow area Z3 and is formed of a metal or other material.

The low-voltage electrode 11 and the outer cylinder 14 are respectively formed like a cylinder having a circular cross section as shown in Fig. 4 (a) when the quantity of exhaust gas processed is small, and one high-voltage electrode 12 is provided in the center of it. However, when the quantity of exhaust gas processed is large, the low-voltage electrode 11 and the outer cylinder 14 are respectively formed like a cylinder having a slender cross section as shown in Fig. 4 (b) and a plurality of high-voltage electrodes 12 are provided in the center of it in parallel.

In the case of the exhaust gas processing system 10A having the above structure, the exhaust gas G emitted by diesel engines is supplied from the entrance 11a and a high voltage is applied to the high-voltage electrode 12. By applying the high voltage, corona discharge is generated around the high-voltage electrode 12 and its circumferential area is filled with ions. Therefore, the PM (floating particulate matter) 20 in the exhaust gas G attracts the ions and is electrified.

The PM 20 electrified in the electrifying area Z1 in the upstream side of the discharging area Z0 is attracted to the gas-permeable area 11p of the low-voltage electrode 11 by an electrostatic force (Coulomb force) at the condensing area Z2 in the downstream side of the discharging area Z0. The attracted PM 20 attaches to the gas-permeable area 11p or passes through the gap or hole of the mesh of the gas-permeable area 11p in accordance with inertia force. Even if getting away from the corona discharge field formed near the high-voltage electrode 12, the electrified PM 20 is drifted toward the low-voltage electrode 11 by an electrostatic force.

The cohesion of the PM 20 that includes ultra-fine particles of tens-of-nm size once attached to the gas-permeable area 11p occurs, and the larger-size PM 20 is formed and enlarged. Moreover, the PM included in the exhaust gas emitted by diesel engines has a comparatively low electric resistance and easily loses electric charges. Therefore, the corpulence PM 20 removes from the gas-permeable area 11p of the low-voltage electrode 11 and re-entrains in accordance with the flow of the exhaust gas Gb and moves to the downstream side because it loses electric charges and electrostatic force. Then, the high-concentration exhaust gas Gb that includes the PM 20 passes between the outer cylinder 14 and the low-voltage electrode 11 and is discharged from the exit 14b.

However, the low-concentration exhaust gas Ga flowing through the central area of the low-voltage electrode 11, that is, the circumferential area of the high-voltage electrode 12, passes through the inside of the low-voltage electrode 11 and is discharged from the exit 11b.

In the case of the exhaust gas Ga at the side of the central area, the quantity of the PM 20 decreases and it becomes low-concentration exhaust gas in which the PM 20 is diluted. On the other hand, in the case of the exhaust gas Gb at the outside of the low-voltage electrode 11, the quantity of the PM 20 increases and it becomes high-concentration exhaust gas in which the PM 20 is condensed.

In Fig. 3, the high-voltage electrode 12 is extended to the upstream side of the gas-permeable area 11p, the electrifying area Z1 is provided to the upstream side, and the PM 20 collected by the low-voltage electrode 11 is enlarged at this area and re-entrained. To simplify the structure, it is also allowed to provide the upstream end 12a of the high-voltage electrode 12 to the same area as the upstream end of the gas-permeable area 11p.

Moreover, in Fig. 3, the downstream end 12b of the high-voltage electrode 12 is constituted so as to extend up to the inside of divide-flow area Z3 of the low-voltage electrode 11. Thereby, after separating the low-concentration exhaust gas Ga, corona discharge field is further maintained. The cohesion of the PM remaining in the low-concentration exhaust gas Ga occurs at this area to perform preprocessing for the PM secondary processing. To simplify the configuration, it is also allowed to provide the downstream end 12b of the high-voltage electrode 12 to the upstream side of the divide-flow area Z3.

It is allowed to use any cylinder as the outer cylinder 14 as long as it has a function for forming a passage of the high-concentration exhaust gas Gb. The outer cylinder 14 is formed of an electrical conductor to hold its potential at the same potential (ground) as the low-voltage electrode 11. According to this configuration, the PM 20 easily separates and re-entrains because it easily loses electric charges, when the PM 20 that directly passes through the gas-permeable area 11p in accordance with inertia force, coheres in the inner wall surface of the outer cylinder 14.

According to the exhaust gas processing system 10A, the PM 20 electrified through corona discharge can be condensed by providing the PM condensing area Z2 in the downstream side of the electrifying area Z1 through corona discharge. That is, it is possible to condense the PM 20 at the outside of the gas-permeable area 11p of the low-voltage electrode 11 by using the following two phenomena. One phenomenon is a phenomenon in which the electrified PM 20 attaches to the gas-permeable area 11p serving as the electrode surface of the gas-permeable area Z2 and the cohesion and corpulence occurs at this area, and re-entrains from the gas-permeable area 11p. The other phenomenon is a phenomenon in which the PM 20 passes through the gas-permeable area 11p in accordance with inertia force of gas flow.

Moreover, at the divide-flow area Z3, the exhaust gas Ga near the high-voltage electrode 12 is supplied to the inside of the low-voltage electrode 11 to supply the exhaust gas Gb passing through the gas-permeable area 11p to the outside of the low-voltage electrode 11. Thereby, it is possible to separate the low-concentration exhaust gas Ga in which the PM 20 is diluted from the high-concentration exhaust gas Gb in which the PM 20 is condensed.

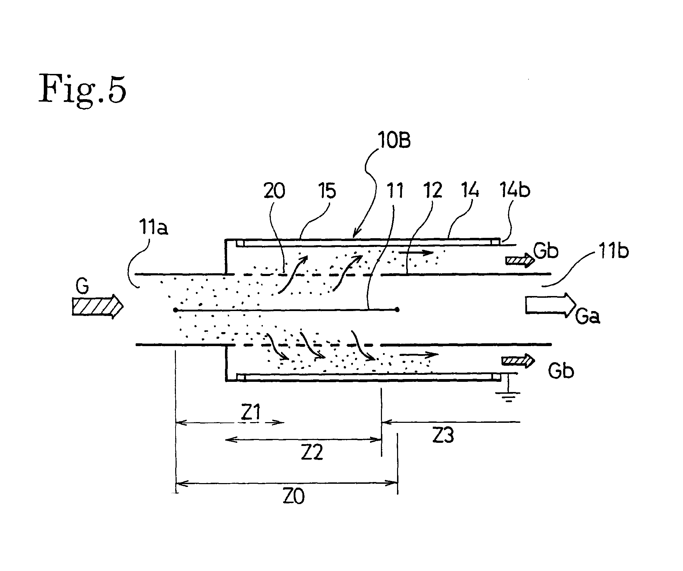

Fig. 5 shows a configuration of an exhaust gas processing system 10B of third embodiment of the present invention. The exhaust gas processing system 10B is constituted by providing an attractive electrode 15 serving as a third electrode, in order to form an electrostatic field for attracting the electrified PM 20 from the gas-permeable area 11p of the low-voltage electrode 11, in addition to the configuration of the exhaust gas processing system 10A of the second embodiment.

When providing the attractive electrode 15, the attractive electrode 15 is electrically grounded and a proper intermediate potential between the high-voltage electrode 12 and the attractive electrode 15 is applied to the low-voltage electrode 11.

Moreover, though the attractive electrode 15 is provided between the low-voltage electrode 11 and outer cylinder 14 in Fig. 5, it is also allowed to use the function of the attractive electrode 15 by forming the outer cylinder 14 by an electrical conductor and electrically grounding.

According to the exhaust gas processing system 10B having the above structure, it is possible to more strongly attract the re-entraining PM 20 at the gas-permeable area 11p of the low-voltage electrode 11 or the electrified PM 20 passing through the gas-permeable area 11p to the outside of the gas-permeable area 11p of the low-voltage electrode 11 by electric field formed by the attractive electrode 15. Therefore, it is possible to prevent the re-entrained PM 20 or the electrified PM 20 from entering inside the low-voltage electrode 11. Therefore, it is possible to more efficiently separate and condense the PM 20.

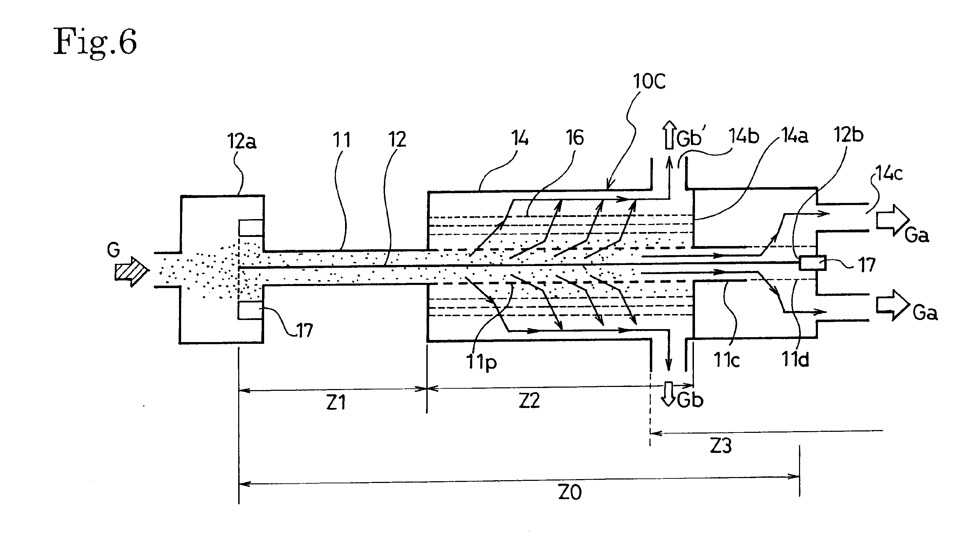

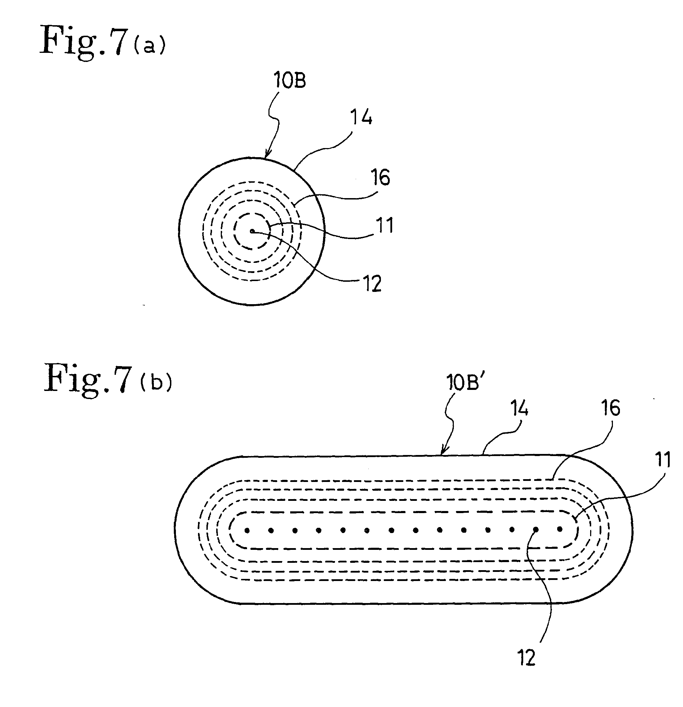

Figs. 6 and 7 show a configuration of an exhaust gas processing system 10C of fourth embodiment of the present invention. The exhaust gas processing system 10C is constituted so as to remove PM 20 from the high-concentration exhaust gas Gb in which the PM 20 is condensed, by additionally providing a filter 16 to the configuration of the particulate matter separator 10A or 10B of the second or third embodiment. Symbol 17 denotes an insulator for electrically insulating the high-voltage electrode 12.

Moreover, the outer cylinder 14 at the outside of the low-voltage electrode 11 compartmentalizes an area for providing the filter 16 and an area for passing the low-concentration exhaust gas Ga by providing a partition wall 14a in the downstream side of the gas-permeable area 11p of the low-voltage electrode 11. Furthermore, a first discharge port 14b for discharging filtered exhaust gas Gb' is formed in the upstream side of the partition wall 14a and a second discharge port 14c for discharging the low-concentration exhaust gas Ga is formed in the downstream side of the partition wall 14a.

Furthermore, a second gas-permeable area 11d that can be ventilated is further provided in the downstream side of the wall surface 11c that cannot be ventilated in the downstream side of the gas-permeable area 11p of the low-voltage electrode 11, so that the low-concentration exhaust gas Ga passing through the wall surface 11c passes through the second gas-permeable area 11d and can be discharged from the second discharge port 14c.

The filter 16 provided in a space in the upstream side of the partition wall 14a of the low-voltage electrode 11 and the outer cylinder 14 is a filter for purifying the high-concentration exhaust gas Gb passing through the gas-permeable area 11p of the low-voltage electrode 11. The filter 16 can be formed by using a well-known filter such as a punching metal, sintered wire sheet, sintered filter, metallic fiber filter, ceramic filter whose pore diameter is larger than that of a DPF, metallic honeycomb, ceramic honeycomb, glass wool, or a filter obtained by carrying an oxidation catalyst to these base materials.

Moreover, in the case of this filter 16, it is possible to easily collect the PM 20 even by a wide-mesh filter because it is enlarged in the high-concentration exhaust gas Gb. Therefore, it is possible to decrease a pressure loss. The configuration in Fig. 6 is constituted by forming a punching metal with a pore diameter of 1 mm (pitch of 2 mm) into three layers.

Moreover, in the case of the PM 20 collected by the filter 16, the PM collection surface is reproduced to keep the PM collection performance for a long time, by a method for providing a fourth PM burning electrode near a PM collection surface, by a method for applying an oxidation catalyst on the PM collection surface, or by a method for providing a heater near the PM collection surface.

When burning and removing PM by using the fourth PM burning electrode, the following constitution is used. The pitch of multi-layer arrangement of a punching metal is increased. Moreover, a wire sheet (not illustrated) electrically insulated from the pipe of the low-voltage electrode 11 or the like is provided by keeping an interval of 1 to 2 mm from the PM collection surface of the punching metal as the fourth PM burning electrode. Discharge is generated between the wire sheet and the PM collection surface by supplying a voltage to the wire sheet from the outside. Thereby, the PM collected in the filter 16 is burned and removed.

Moreover, when applying an oxidation catalyst, an oxidation catalyst of titanium oxide, platinum, or the like is applied to the PM collection surface of the filter 16, or a catalyst carrier having a wall thickness of 3 mm or smaller is provided to the PM collection surface. PM combustion start temperature is lowered as a result of effects of these oxidation catalysts. It is allowed to use a metal or insulating material for the catalyst carrier. Moreover, a bulky or porous body can be used as the shape of the catalyst carrier.

Furthermore, when using a heater, a heater constituted of a Nichrome wire is provided to the PM collection surface of the filter 16, and the heater is regularly heated to burn and remove the PM.

When the quantity of exhaust gas to be processed is small, the low-voltage electrode 11, the outer cylinder 14, and the filter 16 are respectively formed like a cylinder with a circular cross section as shown in Fig. 7 (a), and one high-voltage electrode 12 is also provided in the center of it. However, when the quantity of exhaust gas to be processed is large, the low-voltage electrode 11, the outer cylinder 14, and the filter 16 are respectively formed into a cylinder with a slender cross section as shown in Fig. 7 (b), and a plurality of high-voltage electrodes 12 are provided in the center of it in parallel.

According to the exhaust gas processing system 10C having the above configuration, by providing the filter 16, it is possible to efficiently purify the high-concentration exhaust gas Gb in which the PM 20 is enlarged and condensed. Therefore, it is possible to make the exhaust gas Gb' discharged from the first discharge port 14b clean gas.

It is not always necessary to pass the low-concentration exhaust gas Ga through a PM collection filter because the PM 20 is diluted. However, even when providing a filter for the low-concentration exhaust gas Ga, the quantity of the exhaust gas is greatly decreased compared to the quantity of the original exhaust gas G and moreover, the large PM is removed. Therefore, it is possible to use a fine-mesh filter. Moreover, even if using the fine-mesh filter, the pressure loss is small because the progress of clogging is slow.

When re-circulating the low-concentration exhaust gas Ga in a cylinder as exhaust gas for EGR, the low-concentration exhaust gas Ga is not directly discharged to the outside air and it is unnecessary to provide a filter.

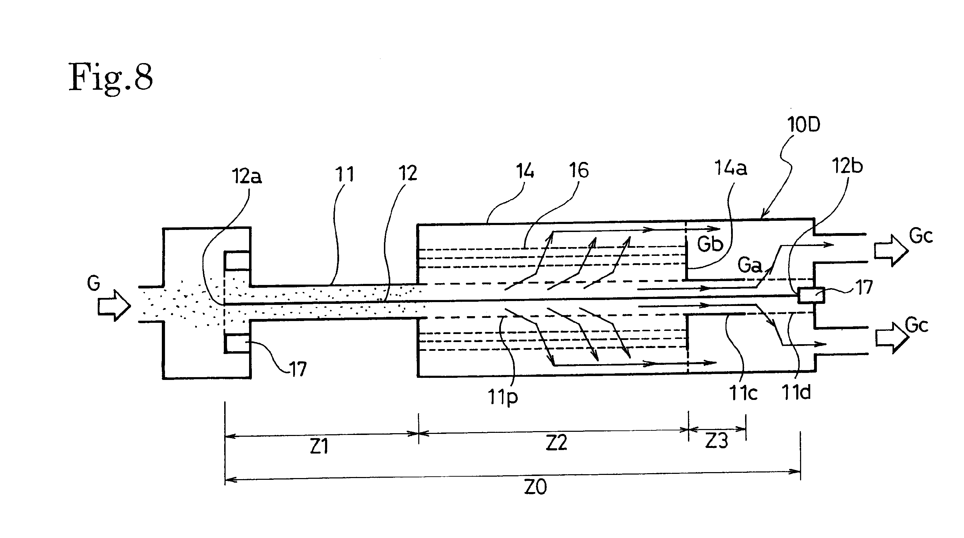

Fig. 8 shows an exhaust gas processing system 10D of fifth embodiment of the present invention. The exhaust gas processing system 10D is constituted so as to join the exhaust gas Gb' passing through the filter 16 with the low-concentration exhaust gas Ga and then discharge the merged gas as exhaust gas Gc.

Thereby, flows of the exhaust gases G, Ga, and Gb are smoothed. Moreover, the unevenness of the apparatus like the first discharge area 14b of the exhaust gas Gb shown in Fig. 6 is eliminated to realize space saving so that pipe arrangement can be easily made.

In the case of the configuration of the exhaust gas processing system 10D of the fifth embodiment, the area of the wall surface 11c that is not gas-permeable in the downstream side of the gas-permeable area 11p of the low-voltage electrode 11 is not always necessary. In this case, the area of the partition wall 14a corresponds to the divide-flow area Z3.

Moreover, the configuration in Figs. 6 to 8 houses the filter 16 in the outer cylinder 14 to downsize the apparatus. Even when providing a filter separately from the exhaust gas processing system 10, 10A, or 10B, it is easy to collect the PM even by a wide-mesh filter and it is possible to decrease the pressure loss because the PM in the high-concentration exhaust gas Gb is enlarged.

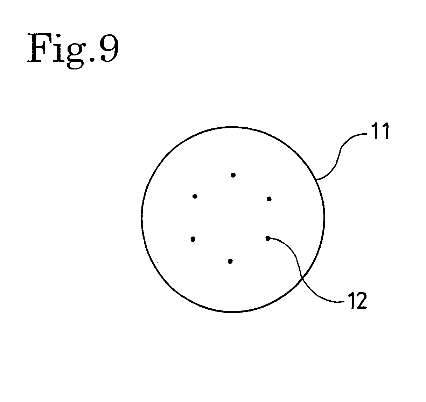

In the case of the exhaust gas processing systems 10 and 10A to 10D of the above embodiments, the low-voltage electrode 11 is described as a cylinder as shown in Figs. 2 (a), 4 (a), and 7 (a). However, the present invention is not restricted to this configuration, and a polygonal housing such as a quadrangle other than a cylinder is also allowed. Moreover, when the quantity of exhaust gas is large, the cross section of the low-voltage electrode 11 is formed into a rectangle and a plurality of high-voltage electrodes 12 are arranged in parallel along the longitudinal direction (direction vertical to rectangular cross section) near the center of the electrodes 11 as shown in Figs. 2 (b), 4 (b), and 7 (b). Furthermore, when the quantity of exhaust gas is large, it is also possible to arrange a plurality of high-voltage electrodes 12 in parallel and spread a corona discharge area as shown in Fig. 9. Furthermore, when the quantity of exhaust gas is large, it is possible to correspond to it by arranging exhaust gas processing systems of the embodiments in parallel. When further raising the condensation degree of high-concentration exhaust gas and the purifying efficiency of low-concentration exhaust gas, it is possible to correspond to it by arranging the systems at multistage.

### Embodiment 1

In the case of the exhaust gas processing system 10 of the first embodiment shown in Figs. 1 and 2 (a), the high-voltage electrode 12 is formed of a stainless wire with a diameter of 0.2 mmφ, the low-voltage electrode 11 is formed by a stainless cylinder with an inside diameter of 38 mmφ, and the inner cylinder 13 is formed of a stainless cylinder with an inside diameter of 15 mmφ. The ratio between the inside and outside cross-sectional area of a cylinder becomes 5:3.

The exhaust gas processing system 10 is directly connected to the exhaust gas pipe area of a small diesel power generator (maximum output of 5 kW) to perform an experiment under an operation condition at 2.4 kW (48%) load. A voltage of -10 kV and a current of 0.4 mA are supplied to a high-voltage electrode by using a negative electrode direct high voltage power supply. The temperature of the exhaust gas processing system 10 is set to 100-200°C, flow rate of exhaust gas is set to approx. 200 L/min (in terms of ordinary temperature), and retention time at a discharge area (length of 120 mm) is set to approx. 0.1 s.

At the above experiment, the PM in each exhaust gas is collected by a quartz filter capable of collecting particulate matter of 0.6 µm, 50 L is sampled, and then the surface of the filter is observed by a low vacuum electronic scanning microscope to observe the distribution of particle diameters.

As a result, a clear difference between the cases of presence of discharge and absence of discharge is observed on the filter inside a double tube through which low-concentration exhaust gas passes. It is found that particulate matter with a several-µm size is hardly observed and diluted in the case of presence of discharge even through the microscope observation. Moreover, as a result of observing the PM included in high-concentration exhaust gas by a microscope, particulate matter of tens of microns to several hundred microns are present. Therefore, it is found that particle diameter of the PM becomes larger than particle diameter (several microns) of the PM in exhaust gas before processed, and there is an extreme enlarging effect.

That is, as a result of the experiment, it is possible to confirm that the PM emitted by diesel engines is collected in a gas discharge line near a low-voltage electrode and can be almost completely separated from a gas discharge line near a high-voltage electrode, without increasing the exhaust gas pressure. Moreover, it is possible to confirm that particulate matter of several microns can be enlarged to larger particulate matter by applying a high voltage.

### Embodiment 2

In the case of the exhaust gas processing system 10C of the fourth embodiment shown in Figs. 6 and 7 (a), the high-voltage electrode 12 is formed of a stainless wire with a diameter of 0.6 mmφ, the low-voltage electrode 11 is formed of a stainless cylinder with an inside diameter of 58 mmφ, and the outer cylinder 14 is formed of a stainless cylinder with an outside diameter of 220 mmφ. The filter 16 is provided to three layers by punching metal with a pore diameter of 1 mm at 2-mm pitch.

The exhaust gas processing system 10C is directly connected to the exhaust gas pipe area of a 2-ton truck to perform an experiment under conditions of an engine speed of 550 rpm, exhaust gas temperature of approx. 70°C, and exhaust gas quantity of approx. 1,400 L/min. A voltage of -18 kV is applied to a high-voltage electrode by using a negative electrode direct high voltage power supply. The retention time at the electrifying area (length of 300 mm) is approx. 30 ms and the retention time at a condensing area (length of 550 mm) is approx. 55 ms.

In the above experiment, the PM in exhaust gas is collected by using a glass fiber filter paper having a 0.3µmφ particle with capturing rate of 99.9% or more and aspirating exhaust gases Ga and Gb' by a constant-flow-rate pump.

As a result, a clear difference between the cases of presence of discharge and absence of discharge is observed in filter paper through which the exhaust gas Ga passes and in filter paper through which the exhaust gas Gb' after passing through the filter 16 passes. Moreover, by applying a voltage to a corona discharge electrode, it is found that the PM can be extremely decreased.

### Embodiment 3

In the case of the exhaust gas processing system 10D of the fifth embodiment shown in Fig. 8, an experiment is performed in the same dimension and condition as the case of the embodiment 2 to collect the PM in exhaust gas by using glass fiber filter paper having a 0.3µmφ particle with capturing rate of 99.9% or more and aspirating the re-merging exhaust gas Gc by a constant-flow-rate pump.

As a result, a clear difference between the cases of presence of discharge and absence of discharge is observed in the filter paper through which the exhaust gas Gc passes. Thereby, it is found that the PM is extremely decreased by applying a voltage to a corona discharge electrode.

## Claims

1. An exhaust gas processing method, comprising a high-voltage electrode and a low-voltage electrode facing said high-voltage electrode, wherein exhaust gas flows through between the counter electrodes, a high voltage is applied between the counter electrodes to generate corona discharge in the exhaust gas, floating particulate matter in the exhaust gas non-uniformly distributes near the low-voltage electrode by electrification and coheres through the corona discharge, and the exhaust gas near the low-voltage electrode is divided into high-concentration exhaust gas in which the concentration of the floating particulate matter is relatively high and low-concentration exhaust gas in which the concentration of the floating particulate matter is relatively low.

2. The exhaust gas processing method according to claim 1, comprising purifying the high-concentration exhaust gas with a filter.

3. An exhaust gas processing system having a high-voltage electrode and a low-voltage electrode facing said high-voltage electrode, comprising:
an electrifying area in which exhaust gas flows through between the counter electrodes, a high voltage is applied between the counter electrodes to generate corona discharge in the exhaust gas, and the floating particulate matter is electrified,
a condensing area for non-uniformly distributing the floating particulate matter electrified by the electrifying area near the low-voltage electrode, and
a divide-flow area for dividing the exhaust gas near the low-voltage electrode in which the concentration of the floating particulate matter is relatively high, into high-concentration exhaust gas in which the concentration of the floating particulate matter is relatively high and low-concentration exhaust gas in which the concentration of the floating particulate matter is relatively low.

4. The exhaust gas processing system according to claim 3, wherein
the low-voltage electrode is formed into a cylindrical body, the high-voltage electrode is provided in the longitudinal direction along near the center of the low-voltage electrode of the cylindrical body in the electrifying area in at least the upstream side of the low-voltage electrode, and an inner cylinder for dividing exhaust gas is provided inside the low-voltage electrode in the divide-flow area in at least the downstream side of the low-voltage electrode, so that the low-concentration exhaust gas flows through the inside of the inner cylinder and the high-concentration exhaust gas flows through the outside of the inner cylinder.

5. The exhaust gas processing system according to claim 3, wherein
the low-voltage electrode is formed into a cylindrical body, the high-voltage electrode is provided in the longitudinal direction along near the center of the low-voltage electrode in the cylindrical body in the electrifying area in at least the upstream side of the low-voltage electrode, the low-voltage electrode is formed to be gas-permeable in the condensing area in the downstream side of the electrifying area, and an outer cylinder is provided outside the low-voltage electrode in the condensing area and the divide-flow area so that the exhaust gas flowing in from the upstream side of the low-voltage electrode is divided into the low-concentration exhaust gas flowing through the inside of the low-voltage electrode and the high-concentration exhaust gas flowing through the outside of the low-voltage electrode.

6. The exhaust gas processing system according to any one of claims 3 to 5, comprising a filter for purifying floating particulate matter included in the high-concentration exhaust gas.

7. The exhaust gas processing system according to any one of claims 3 to 6, wherein
the exhaust gas is exhaust gas of an internal combustion engine.
